Europäisches Patentamt

European Patent Office

Office européen des brevets

(19)

(11) Veröffentlichungsnummer: **0 228 531**
**B1**

(12) **EUROPÄISCHE PATENTSCHRIFT**

(45) Veröffentlichungstag der Patentschrift: **06.06.90**

(21) Anmeldenummer: **86115133.0**

(22) Anmeldetag: **31.10.86**

(51) Int. Cl.⁵: **H 01 M 2/14, H 01 M 6/16, H 01 M 4/40**

(54) **Galvanisches Element in Rundzellenform mit zentrisch angeordneter Lithium-Anode und nichtwässrigem Elektrolyten.**

(30) Priorität: **09.12.85 DE 3543426**

(43) Veröffentlichungstag der Anmeldung:
**15.07.87 Patentblatt 87/29**

(45) Bekanntmachung des Hinweises auf die Patenterteilung:
**06.06.90 Patentblatt 90/23**

(84) Benannte Vertragsstaaten:
**DE FR GB**

(56) Entgegenhaltungen:
**DE-A-3 409 584**
**GB-A-2 042 788**

**Derwent Abstract No. 81-95 813 D (52), Derwent Publications Ltd. London Matsushita Elec. Ind. KK: "Storage battery manufactoring by placing collector into lithium ingot covered by separator e.g. polypropylene, inserted into hollow positive electrode cylinder"**

(73) Patentinhaber: **VARTA Batterie Aktiengesellschaft Am Leineufer 51 D-3000 Hannover 21 (DE)**

(72) Erfinder: **Kretzschmar, Reiner Frankfurter Strasse 107 D-6233 Kelkheim (DE)**

(74) Vertreter: **Kaiser, Dieter Ralf, Dipl.-Ing. Gundelhardtstrasse 72 Postfach 16 20 D-6233 Kelkheim/Ts. (DE)**

Courier Press, Leamington Spa, England.

**Beschreibung**

Die Erfindung betrifft ein galvanisches Element in Form einer Rundzelle mit zentrisch angeordneter Lithiumanode, einem Separator aus Kunststoff-Vlies, welcher die Lithiumelektrode als geschlossene Hülse umgibt, einer diesen umgebenden Ringkathode und einem nichtwässrigen Elektrolyten.

Derartige Elemente sind beispielsweise der DE-A 3409584 zu entnehmen, die eine Lithium/$MnO_2$ Rundzelle mit einem Kunststoff-Vlies als Separator beschreibt.

Im Laufe der Entladung solcher Zellen geht Lithium in Lösung, so daß die negative Elektrode ihr Volumen verringert. Da der Volumenschwund nicht kompensiertwird, ist die Zelle bereitsnach einer Teilentladung nicht mehr vollständig mit festen und flüssigen Komponenten gefüllt. Es bildet sich eine Gasblase, die je nach Lage der Zelle den entstandenen Freiraum zwischen den Elektroden teilweise oder vollständig ausfüllt und die Ionenleitung zwischen den Elektroden störend unterbricht.

Die durch Elektrolyt nicht mehr überbrückten Flächenbereiche der Elektroden werden nicht entladen, selbst wenn Elektrolyt im Überschuß vorhanden ist, der jedoch wegen der erwähnten Gasblase am gewünschten Ort für die elektrochemische Reaktion nicht zur Verfügung steht.

Um diesem Mangel, der allgemein bei Zellen mit eng eingebauten Lösungselektroden auftritt, abzuhelfen, hat man z.B. bereits versucht, den Elektroden eine gewisse Beweglichkeit einzuräumen mit dem Ziel, den gegenseitigen Abstand von negativer und positiver Elektrode mit zwischenliegendem Separator unter allen Umständen konstant zu halten. Bei einer Rundzelle mit konzentrischer Elektrodenanordnung wird dies nach GB-PS 1.505.473 dadurch erreicht, daß die ineinandergefügten hohlzylindrischen Elektrodenkörper jeweils in zwei Halbzylinder unterteilt sind, so daß sie unter dem Druck eines unter elastischer Spannung stehenden Zentralkörpers radial gegen die Gehäuseinnenwand verschoben werden können.

Nach GB-PS 1.556.395 ist der zentrale Hohlraum einer hohlzylindrischen Lithiumanode von einem Metallgewebeschlauch ausgefüllt, der sich beim Hineindrücken eines an seinem oberen Ende angeflanschten Zylinderstopfens mittels einer Federspannung zu verkürzen und andererseits zu erweitern trachtet, so daß auch hier durch radialen Druck auf die Lithiumelektrode deren enger Kontakt zum elektrolytgetränkten Separator und zu der umhüllenden positiven Elektrode stets erhalten bleibt.

Die bekannten Maßnahmen sind in konstruktiver Hinsicht aufwendig und erfordern in der Zelle erheblichen Raum, der nicht für die Unterbringung aktiver Komponenten genutzt werden kann.

Der Erfindung liegt daher die Aufgabe zugrunde, ein galvanisches Element der eingangs beschriebenen Gattung anzugeben, bei dem dafür gesorgt ist, daß ungeachtet der mit fortschreitender Entladung einhergehenden Volumenabnahme der Lithiumelektrode der zwischen dieser und der positiven Elektrode bestehende Elektrolytkontakt an keiner Stelle abreißt.

Die Aufgabe wird erfindungsgemäß mit den im Anspruch 1 angegebenen Mitteln gelöst.

Anhand der Figurendarstellungen sollen die erfindungsgemäße Maßnahme und ihre vorteilhafte Wirkung verdeutlicht werden.

Figur 1 zeigt die Einzelteile des erfindungsgemäßen Elements zu Beginn der Montage.

Figur 2 zeigt das Element während der erfindungsgemäßen Montage des Separators und der Lithiumanode.

Figur 3 zeigt die gebrauchsfertige frische Zelle.

Figur 4 zeigt die Zelle am Ende der Entladung.

Durch die Erfindung wird erreicht, daß die auflösungsbedingte Abtragung der Lithiumanode während der Entladung kontinuierlich mit Elektrolyt aufgefüllt wird, so daß kein gasgefüllter Freiraum zwischen den beiden Elektrodenpolaritäten entstehen kann. Die für den Nachlauf benötigte Elektrolytmenge ist bei der einmaligen Elektrolytdotierung bereits berücksichtigt und findet ihren Platz zunächst außerhalb der Elektroden bzw. abseits vom Ort der Elektrodenreaktion.

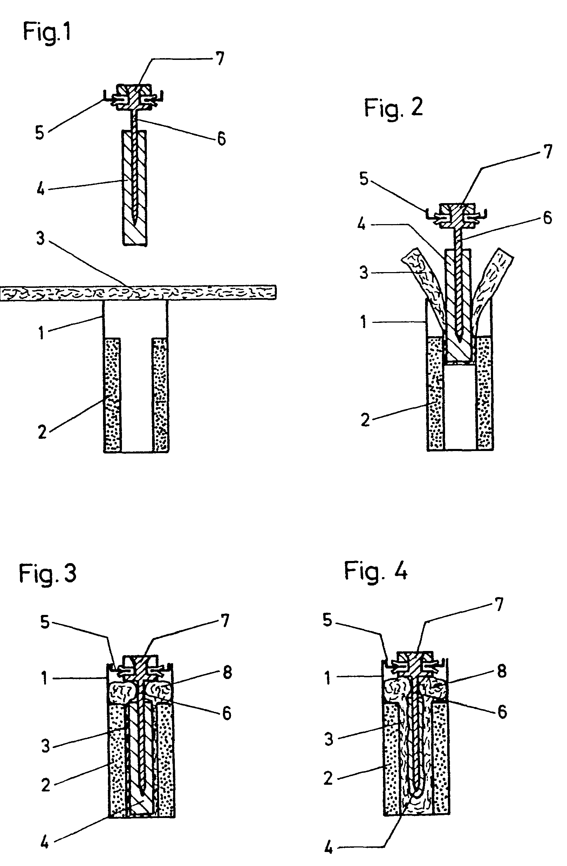

In Figur 1 sind der Zellenbecher 1 und die Ringkathode 2, beispielsweise aus Chromoxid oder Wismutoxid, bereits mit der Gesamtmenge an organischem Elektrolyt, z.B. Propylencarbonat, versehen. Dem offenen Zellenbecher liegt ein streifenförmig geschnittenes Separatorvlies 3 aus Kunststoff von lockerer großporiger Konsistenz und in mittiger Orientierung zur Zellenöffnung auf. Die Breite des Vliesstreifens sollte mindestens dem halben Umfang der Lithiumelektrode entsprechen. Die Länge des Vliesstreifens ist so bemessen, daß sich in seiner späteren Positionierung als Hülle um die Lithiumelektrode 4 ein bis zum Zellendeckel 5 heranreichender Überstand über die oberen Elektrodenränder hinaus ergibt. Lithiumelektrode und Zellendeckel sind zusammen mit dem nagelförmigen Anodenableiter 6 und dem gegen den Zellendeckel elektrisch isolierten Ableiterkopf 7 bereits vormontiert.

Gemäß Figur 2 wird der Separator nunmehr unmittelbar mit Hilfe der stabförmigen Lithiumelektrode, quasi wie mit dem Stempel in einer Tiefziehvorrichtung, in den Kathodenhohlraum eingezogen und darin eingepreßt, wobei der großporige Vliesstreifen auf etwa 1/10 seiner Ausgangsdicke zusammengedrückt wird und am Ende die Lithiumelektrode als allseitig geschlossene Hülse umgibt.

Ein für den erfindungsgemäßen Zweck besonders geeignetes, da vor allem reißfestes Vliesmaterial ist Polypropylen. Ein handelsübliches Produkt der Firma Freudenberg trägt die Bezeichnung "Viledon". FS 2150 und besitzt bei einer Dicke von 5 mm ein Flächengewicht von 150 g/$m^2$. Nicht weniger brauchbar ist z.B. aber auch Polyamid.

Bei Flächengewichten der Vliese zwischen 120 und 170 g/$m^2$, die besonders günstig sind, sollte die Ausgangsdicke des Vliesstreifens 4 mm nicht unterschreiten, wenn die Zelle, wie auch in den Figurendarstellungen beispielhaft vorausgesetzt, das halbe Größenformat einer Mignonzelle besitzt (halbe Höhe der IEC-Größe R6).

In der gebrauchsfertigen Zelle nach Figur 3 ist das Vlies bis auf eine Dicke von ca. 0,5 mm zusammengedrückt, ausgenommen der überstehende Teil 8, in welchem sich im wesentlichen der Reserve-Elektrolyt befindet, während der verdichtete Teil des Separatorstreifens gerade so viel Elektrolyt aufgesogen hat, daß der Entladeprozeß vonstatten gehen kann. Mit dessen Fortschreiten nimmt nun die Dicke der Lithiumelektrode ab, während das gepreßte Separatorvlies sich ausdehnt und so den mechanischen Kontakt zwischen Anode und Kathode aufrechterhält. Der überschüssige reservierte Elektrolyt wird durch die entstehende Saugwirkung und vorhandene Kapillarkräfte in die Entladezone transportiert und garantiert somit eine einwandfreie Entladung der Zelle bis zum weitestgehenden Verbrauch der Lithiumelektrode, wie er durch Figur 4 dargestellt ist.

Ein besonderer Vorteil des erfindungsgemäßen Elements liegt darin, daß es unabhängig von der Lage funktionsfähig ist. Seine Herstellung ist außerdem sehr kostengünstig, weil die gesonderte Anfertigung einer Separatorhülle entfällt und stattdessen direkt von einer Vorratsrolle gearbeitet werden kann.

## Patentansprüche

1. Galvanisches Element in Form einer Rundzelle mit zentrisch angeordneter Lithiumanode, einem Separator aus Kunststoff-Vlies, welcher die Lithiumelektrode als geschlossene Hülse umgibt, einer diesen umgebenden Ringkathode und einem nichtwässrigen Elektrolyten, dadurch gekennzeichnet, daß der Separator ein streifenförmiger Zuschnitt ist, und die Hülse durch direktes Einpressen des mittig über den offenen Zellenbecher gelegten Vliesstreifens in den Kathodenhohlraum mit Hilfe der Lithiumelektrode unter starker Verdichtung des ursprünglich hochporösen, lockeren Vliesmaterials gebildet ist.

2. Galvanisches Element nach Anspruch 1, dadurch gekennzeichnet, daß das Vliesmaterial Polypropylen ist.

3. Galvanisches Element nach Anspruch 2, dadurch gekennzeichnet, daß das flächenspezifische Gewicht des Separatorvlieses 120 bis 170 g/m² beträgt.

4. Verfahren zur Herstellung eines galvanischen Elements nach den Ansprüchen 1 bis 3, dadurch gekennzeichnet, daß ein Vliesstreifen hoher Porosität und lockerer Konsistenz, dessen Breite mindestens dem halben Umfang der stabförmigen Lithiumelektrode und dessen Länge dem ca. 2 ½ fachen der Lithiumelektrode entspricht und der in mittiger Orientierung dem offenen, mit der Ringkathode und Elektrolyt bereits versehenen Zellenbecher aufliegt, unmittelbar durch die Lithiumelektrode in den Kathodenhohlraum eingezogen und darin eingepreßt wird, wobei unter starker Verdichtung des Vliesmaterials eine geschlossene Hülse um die Lithiumelektrode gebildet wird.

## Revendications

1. Elément galvanique de forme ronde avec une anode de lithium disposée centralement, avec un séparateur en étoffe de fibres de matière plastique non tissée qui entoure l'électrode de lithium sous la forme d'une gaine fermée, une cathode annulaire entourant cette gaine et un électrolyte, non aqueux, élément caractérisé en ce que le séparateur est une découpe en forme de bande et la gaine est formée en enfonçant directement dans l'espace creux de la cathode, à l'aide de l'électrode de lithium, la bande d'étoffe non tissée placée en son milieu sur le godet ouvert de l'élément, en comprimant fortement le matériau, initialement lâche et à gros pores, de l'étoffe non tissée.

2. Elément galvanique selon la revendication 1, caractérisé en ce que le matériau de l'étoffe non tissée est du polypropylène.

3. Elément galvanique selon la revendication 2, caractérisé en ce que le grammage de l'étoffe non tissée du séparateur se situe entre 120 et 170 g/m².

4. Procédé pour la fabrication d'un élément galvanique selon les revendications 1 à 3, caractérisé en ce qu'une bande d'étoffe non tissée de porosité élevée et de consistance lâche, dont la largeur correspond au moins à la moitié de la périphérie de l'électrode de lithium en forme de barreau, et dont la longueur correspond à peu près à deux fois et demie la hauteur de l'électrode de lithium, est placée en son milieu sur le godet ouvert de l'élément déjà muni de la cathode annulaire et de l'électrolyte, cette bande d'étoffe non tissée étant introduite directement par l'électrode de lithium dans l'espace creux de la cathode et y étant enfoncée, et une douille fermée étant ainsi formée autour de l'électrode de lithium avec forte compression du matériau de l'étoffe non tissée.

## Claims

1. Galvanic element in the form of a round cell with central lithium anode, a separator made of synthetic fleece which encloses the lithium electrode as a closed sleeve, an annular cathode enclosing the latter and a non-aqueous electrolyte, characterized in that the separator is a strip-shaped blank, and the sleeve is formed by directly pressing the strip of fleece placed centrally over the open cell container into the cathode cavity with the aid of the lithium electrode with great compression of the originally highly porous, loose fleece material.

2. Galvanic element according to Claim 1, characterized in that the fleece material is polypropylene.

3. Galvanic element according to Claim 2, characterized in that the weight per unit area of the separator fleece is 120 to 170 g/m².

4. Method of producing a galvanic element according to Claims 1 to 3, characterized in that a fleece strip of high porosity and loose consistency, the width of which is at least half the circumference of the bar-shaped lithium electrode and the length of which corresponds to approximately 2 ½ times that of the lithium electrode and which lies centrally on the open cell container already provided with the annular cathode and electrolyte, is drawn directly through the lithium electrode into the cathode cavity and pressed in there, a closed sleeve being formed around the lithium electrode with great compression of the fleece material.

Fig.1

Fig. 2

Fig. 3

Fig. 4